Europäisches Patentamt

European Patent Office

Office européen des brevets

(19)

(11) **EP 0 840 157 A2**

(12) # EUROPÄISCHE PATENTANMELDUNG

(43) Veröffentlichungstag:
06.05.1998 Patentblatt 1998/19

(51) Int. Cl.⁶: **G02B 23/12**, G02B 26/10

(21) Anmeldenummer: 97118771.1

(22) Anmeldetag: 29.10.1997

(84) Benannte Vertragsstaaten:
AT BE CH DE DK ES FI FR GB GR IE IT LI LU MC NL PT SE
Benannte Erstreckungsstaaten:
AL LT LV RO SI

(30) Priorität: 05.11.1996 DE 19645573

(71) Anmelder:
Bodenseewerk Gerätetechnik GmbH
88662 Überlingen (DE)

(72) Erfinder: Kempas, Hagen
88662 Überlingen (DE)

(74) Vertreter:
Weisse, Jürgen, Dipl.-Phys. et al
Patentanwälte
Dipl.-Phys. Jürgen Weisse
Dipl.-Chem. Dr. Rudolf Wolgast
Bökenbusch 41
42555 Velbert (DE)

(54) **Rundumbeobachtungs-Gerät**

(57) Zur Erfassung eines Gesichtsfeldes mit einem großen Raumwinkel ist ein Rundumbeobachtungs-Gerät vorgesehen. Das Rundumbeobachtungs-Gerät enthält ein abbildendes optisches System mit kontinuierlich um eine erste (32) Achse mit einer ersten Drehzahl umlaufenden Objektivmitteln (28) mit einem umlaufenden Abbildungs-Strahlengang und ein mit einer zweiten Drehzahl umlaufendes Polygonrad (44) in dem umlaufenden Abbildungs-Strahlengang mit strahlablenkenden Mitteln (46) zur stetigen Ablenkung des Abbildungs-Strahlenganges jedesmal, wenn der umlaufende Abbildungs-Strahlengang eine Polygonfläche des Polygonrades (44) passiert, derart, daß während einer endlichen Beobachtungszeit ein Gesichtsfeld-Sektor (88) stationär auf einem Detektor (90,92) mit einer zwei-dimensionalen Anordnung von Detektorelementen abgebildet wird. Ein Motor (20) dient zum kontinuierli-chen Drehen des Polygonrades (44) und der Objektivmittel (28) um eine zweite Achse (26), die mit der ersten Achse (32) einen Winkel einschließt, mit einer dritten Drehzahl.

Fig. 1

EP 0 840 157 A2

**Beschreibung**

**Technisches Gebiet**

Die Erfindung betrifft ein Rundumbeobachtungs-Gerät zur Erfassung eines Gesichtsfeldes mit einem großen Raumwinkel durch wenigstens einen Detektor mit einer zweidimensionalen Anordnung von Detektorelementen.

Eis solches Rundumbeobachtungs-Gerät soll ein großes Gesichtsfeld, das größer als ein Halbraum ist, mit hoher räumlicher Auflösung beobachten. Beispielsweise soll das Rundumbeobachtungs-Gerät einen Bereich von 360° im Azimut und von -30° bis +90° in der Elevation laufend beobachten. Das geht nur mit einer Abtastung, d.h. in der Weise, daß die verschiedenen Gesichtsfeld-Sektoren nacheinander erfaßt werden. Dabei bestehen jedoch zwei Forderungen: Die Abtastung muß mit hinreichend hoher Wiederholfrequenz erfolgen. Es muß also das Gesichtsfeld in möglichst kurzer Zeit überstrichen werden. Außerdem muß aber der Detektor von jedem Gesichtsfeld-Sektor hinreichend lange belichtet werden.

Mit einem starren System von abbildendem optischen Systen und Detektor, das nacheinander auf die verschiedenen Gesichtsfeld-Sektoren gerichtet wird, ist dieses Problem nicht zu lösen. Allein für einen 360°-Schwenk wären bei Verwendung von üblichen IR-Matrix-Detektoren zwölf bis sechzehn Einzelbilder erforderlich. Dazu kommen noch die Elevations-Schritte. Bei einer der Merkator-Projektion ähnlichen Abtastung wären etwa sechshundert Bilder pro Sekunde aufzunehmen. Ein Schwenken und Positionieren des optischen Systems mit dem Detektor mit dieser Frequenz ist nicht realisierbar. Das gilt auch, wenn mit zwei Detektoren gearbeitet und dadurch die Frequenz halbiert wird.

Eine kontinuierliche Bewegung eines solchen starren Systems würde zu nicht akzeptablen Bewegungs-Unschärfen führen.

**Stand der Technik**

Die EP-A-0 629 890 offenbart ein optisches Rundumsuchgerät mit einem ersten Sucher für die Zieldetektion durch welche das Gesichtsfeld kontinuierlich abtastbar ist. Ein speicher dient zur Speicherung der Positionen detektierter Ziele. Ein zweiter Sucher mit einem hochauflösenden Bildsensor ist schrittweise nacheinander auf die gespeicherten Positionen der detektierten Ziele ausrichtbar. In jeder dieser Positionen verbleibt der zweite Sucher für eine ausreichende Beobachtungszeit.

In der Kino- und Filmtechnik sind verschiedene Verfahren bekannt, die bei kontinuierlichem Filmdurchlauf stehende Bilder erzeugen.

Ferner sind optische Abtastsysteme bekannt, bei denen bei kontinuierlicher Drehung ein stehendes Gesamtbild erzeugt wird. Dabei werden Detektorzeilen mit extrem kurzer Belichtungszeit belichtet.

**Offenbarung der Erfindung**

Der Erfindung liegt die Aufgabe zugrunde, ein Rundumbeobachtungs-Gerät zu schaffen, das in der Lage ist, ein großes Gesichtsfeld schnell und mit hoher Auflösung zu erfassen, wobei der Detektor für jedes Bild ausreichend lange belichtet wird und Bewegungs-Unschärfen vermieden werden.

Erfindungsgemäß wird diese Aufgabe gelöst durch

(a) ein abbildendes optisches System mit kontinuierlich um eine erste Achse mit einer ersten Drehzahl umlaufenden Objektivmitteln mit einem umlaufenden Abbildungs-Strahlengang,

(b) ein mit einer zweiten, höheren Drehzahl umlaufendes Polygonrad in dem umlaufenden Abbildungs-Strahlengang mit strahlablenkenden Mitteln zur stetigen Ablenkung des Abbildungs-Strahlenganges jedesmal, wenn der umlaufende Abbildungs-Strahlengang eine Polygonfläche des Polygonrades passiert, derart, daß während einer endlichen Beobachtungszeit ein Gesichtsfeld-Sektor stationär auf dem Detektor abgebildet wird.

Durch die umlaufenden Objektivmittel erfolgt eine Abtastung eines Streifens des Gesichtsfeldes längs einer zu der ersten Achse senkrechten Ebene. Das kann z.B. eine Abtastung des Gesichtsfeldes in der Elevation sein. Die Objektivmittel laufen dabei kontinuierlich um. Sie brauchen nicht abgebremst und wieder beschleunigt zu werden, um in vorübergehend stillstehendes Bild zu erzeugen. Diese letztere Funktion übernehmen die strahlablenkenden Mittel des Polygonrades. Diese Laufen mit höherer Drehzahl als die Objektivmittel um. Jede Fläche des Polygonrades lenkt den Strahlengang der Objektivmittel beim Vorbeigehen an diesen so ab, daß vorübergehend ein stillstehendes Bild eines gerade erfaßten Gesichtsfeld-Sektors auf dem Detektor erzeugt wird. Bewegungs-Unschärfen werden dadurch vermieden. Das Polygonrad läuft dabei ebenfalls kontinuierlich um.

Zur Abtastung des gesamten Gesichtsfeldes können dann Mittel zum kontinuierlichen Drehen des Polygonrades und der Objektivmittel um eine zweite Achse, die mit der ersten Achse einen Winkel einschließt, mit einer dritten Drehzahl vorgesehen sein.

Weitere Ausgestaltungen der Erfindung sind Gegenstand der Unteransprüche 2 bis 18.

Ein Ausführungsbeispiel der Erfindung ist nachstehend unter Bezugnahme auf die zugehörigen Zeichnungen näher erläutert.

## Kurze Beschreibung der Zeichnungen

Fig.1    zeigt einen Vertikalschnitt durch ein Rundumbeobachtungs-Gerät.

Fig.2    zeigt im einzelnen die Objektivmittel und das Polygonrad.

Fig.3    zeigt eine Axialansicht der Objektivmittel und des Polygonrades mit den zugehörigen Gesichtsfeld-Sektoren.

Fig.4    ist eine schematische Darstellung eines Rundumbeobachtungs-Gerätes und dient der besseren Veranschaulichung der Wirkungsweise.

Fig.5    ist eine schematische Darstellung der Objektivmittel und des gerade wirksamen Teils des Polygonrades zum Zeitpunkt $t_0$ - 200 µs, wenn $t_0$ der in Fig.4 dargestellte Zeitpunkt ist.

Fig.6    ist eine Darstellung ähnlich Fig.5 und zeigt die Anordnung zum Zeitpunkt $t_0$.

Fig.7    ist eine Darstellung ähnlich Fig.5 und zeigt die Anordnung zum Zeitpunkt $t_0$+200 µs.

Fig.8    ist eine schematische Darstellung ähnlich Fig.4 und zeigt eine Abwandlung des Rundumbeobachtungs-Gerätes, bei welcher das Polygonrad und die Objektivmittel gegensinnig umlaufen.

Fig.9    ist eine schematische Darstellung der Objektivmittel und des gerade wirksamen Teils des Polygonrades zum Zeitpunkt $t_0$ - 200 µs, wenn $t_0$ der in Fig.8 dargestellte Zeitpunkt ist.

Fig.10    ist eine Darstellung ähnlich Fig.9 und zeigt die Anordnung zum Zeitpunkt $t_0$.

Fig.11    ist eine Darstellung ähnlich Fig.9 und zeigt die Anordnung zum Zeitpunkt $t_0$+200 µs.

Fig.12    veranschaulicht die Abtastung zweier aneinandergrenzender Streifen des Gesichtsfeldes bei einem Umlauf der Objektivmittel und bei Verwendung zweier Detektoren, im wesentlichen wie in Fig.1 dargestellt.

## Bevorzugte Ausführung der Erfindung

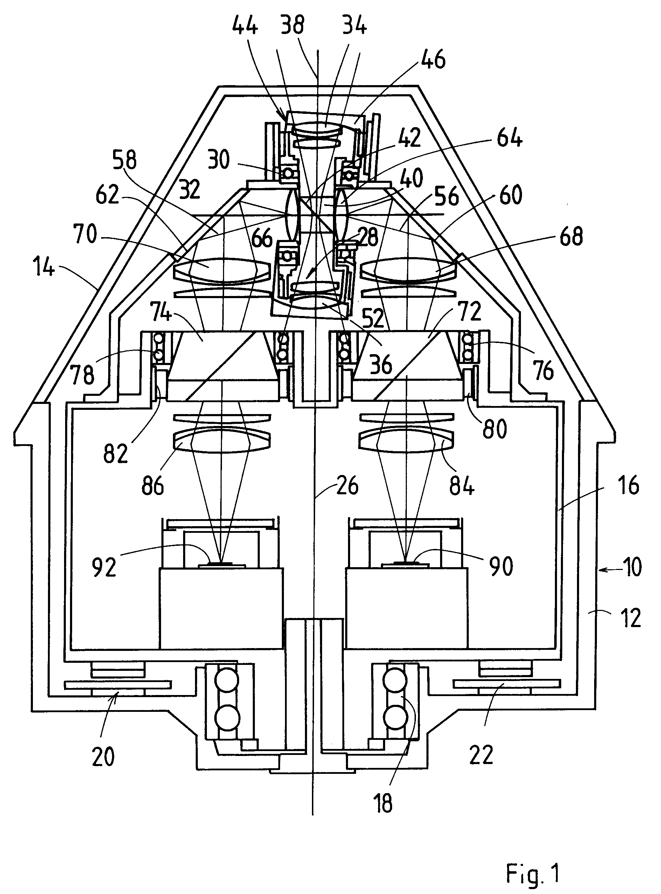

In Fig.1 ist mit 10 ein Gehäuse bezeichnet. Das Gehäuse 10 weist einen topfförmigen Unterteil 12 und eine kegelstumpfförmige, für infrarote Strahlung durchlässige Haube 14 auf. In dem Unterteil 12 ist ein Hauptrahmen 16 über ein Lager 18 drehbar gelagert. Der Hauptrahmen 16 ist gegenüber dem stationären Gehäuse 10 durch einen Motor 20 mit einem an dem Boden des Unterteils 12 sitzenden ringscheibenförmigen Stator 22 und einem an dem Hauptrahmen 16 sitzenden, ebenfalls ringscheibenförmigen Rotor 24 um eine vertikale "zweite" Achse 26 antreibbar.

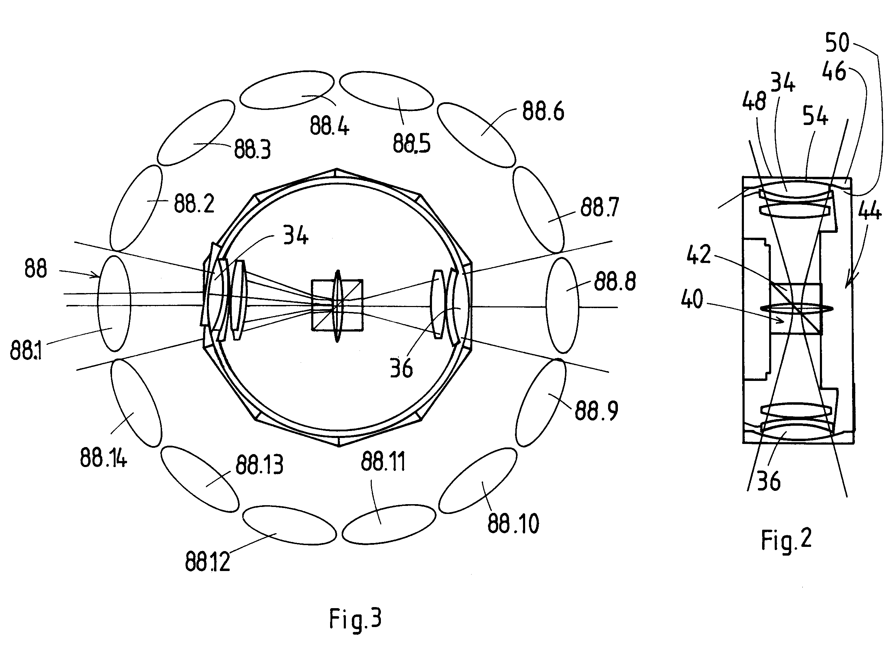

In dem Zwischenrahmen 16 sind "Objektivmittel" 28 über ein Lager 30 um eine "erste" Achse 32 drehbar gelagert. Die erste Achse 32 verläuft senkrecht zu der "zweiten" Achse 26, also horizontal. Die "Objekivmittel" sind ein Objektivrad mit zwei diametral gegenüberliegend angeordneten Objektiven 34 und 36. Wie am besten aus Fig.2 ersichtlich ist, sitzt im Schnittpunkt der ersten Achse 32 und der fluchtenden optischen Achsen 38 der Objektive 34 und 36 ein Prisma 40. Das Prisma 40 rotiert zusammen mit den Objektiven 34 und 36 der Objektivmittel 28.

Das Prisma 40 ist würfelförmig mit einer zwei gegenüberliegende Kanten verbindenden Trennfläche, durch welche das Prisma in zwei Teile von gleichschenklig-dreieckiger Form geteilt wird. Die Trennfläche bildet einen schmalen Spalt. An der Trennfläche werden daher die längs der optischen Achsen 38 einfallenden Strahlen totalreflektiert. Die Trennfläche bildet daher eine erste Umlenk-Spiegelfläche 42, die auf beiden Seiten spiegelnd ausgebildet ist. Ein Abbildungs-Strahlengang von dem Objektiv 34 wird an dieser ersten Umlenk-Spiegelfläche 42 nach rechts in Fig.1 um 90° umgelenkt und verläuft längs der ersten Achse 32. Ein Abbildungs-Strahlengang von dem Objektiv 36 wird an der ersten Umlenk-Spiegelfläche 42 nach links in Fig.1 um 90° umgelenkt und verläuft ebenfalls längs der ersten Achse 32 aber entgegengesetzt zu dem Abbildungs-Strahlengang von dem Objektiv 34.

Um die umlaufenden Objektivmittel 28 rotiert ein ebenfalls umlaufendes Polygonrad 44. Das Polygonrad 44 weist einen Kranz von plankonkaven Linsen 46 auf. Die Durchmesser der Linsen 46 sind größer als die Eintritts-Apertur der Objektive 34 und 36. Wie am besten aus Fig.2 ersichtlich ist, weisen die plankonkaven Linsen 46 eine plane Außenfläche 48 und eine konkav-sphärische Innenfläche 50 auf. Das Polygonrad 44 ist auf einem Lager 52 drehbar gelagert. Die Mittelebene des Polygonrades bildet mit der Mittelebene der Objektivmittel 28 einen kleinen Winkel. Dementsprechend dreht sich das Polygonrad auch um eine Achse, die mit der ersten Achse 32, um welche die Objektivmittel 28 umlaufen, einen kleinen Winkel bildet.

Die konkav-sphärischen Innenflächen 50 der plankonkaven Linsen 46 sind um den Schnittpunkt der ersten Achse 32 und der (nicht dargestellten) Umlaufachse des Polygonrades gekrümmt. Die Vorder- oder Außenflächen 54 der Objektive 34 und 36 sind ebenfalls um den Schnittpunkt dieser Achsen gekrümmt und bilden mit den Innenflächen der plankonkaven Linsen 46 schmale Luftspalte.

Die beiden von den beiden Objektiven 34 und 36 an der Umlenk-Spiegelfläche 42 nach rechts bzw. links in Fig.1 umgelenkten Strahlengänge 56 bzw. 58 werden durch zweite Umlenk-Spiegelflächen 60 bzw. 62 nochmals um 90° umgelenkt, so daß sie jetzt parallel zu der zweiten Achse 26 nach unten in Fig.1 verlaufen. In jedem der Strahlengänge 56 und 58 sitzt zwischen der ersten Umlenk-Spiegelfläche 42 und der zweiten Umlenk-Spiegelfläche 60 bzw. 62 eine Feldlinse 64 bzw. 66. Die Strahlengänge enthalten dann je ein Objektiv 68 bzw. 70 und "bilddrehende Mittel" in Form eines Pechan-Prismas 72 bzw. 74. Die Pechan-Prismen 72 und 74 sind in Lagern 76 bzw. 78 um Achsen drehbar gelagert, die parallel zu der zweiten Achse 26 verlaufen. Die Pechan-Prismen 72 und 74 sind durch je einen Motor 80 bzw. 82 mit einer Drehzahl antreibbar, die der halben Antriebsdrehzahl der Objektivmittel 28, d.h. des Objektivrades, entspricht. In den Abbildungs-Strahlengängen 56 und 58 ist hinter dem Pechan-Prismen 72 bzw. 74 jeweils ein weiteres Objektiv 84 bzw. 86 angeordnet. Von dem Objektiv 34 bzw. 36 wird über die Umlenk-Spiegelflächen und die weiteren Objektive je ein Bild eines Gesichtsfeld-Sektors 88 (Fig.3) in der Ebene eines zugeordneten Detektors 90 bzw. 92 erzeugt. Die Detektoren 90 und 92 sind IR-Matrix-Detektoren mit einer zweidimensionalen Anordnung von infrarotempfindlichen Detektor-Elementen. Durch das Pechan-Prisma 72 oder 74 werden die Bilder der Gesichtsfeld-Sektoren 88, die sich durch die Drehung der Umlenk-Spiegelfläche 42 in der Bildebene drehen würden, relativ zu den Detektoren 90 bzw. 92 stillstehend gemacht.

Die Wirkungsweise des beschriebenen Rundumbeobachtungs-Gerätes ist wie folgt:

Wenn sich das Polygonrad mit einer plankonkaven Linse 46 vor dem Objektiv 34 oder 36 der Objektivmittel 28, dann wirkt das entsprechende Linsenelement der plankonkaven Linse 46 wie ein im Keilwinkel veränderliches Prisma. Der Abbildungs-Strahlengang 56 bzw. 58 des Objektivs für die Abbildung eines bestimmten Gesichtsfeld-Sektors wird dadurch relativ zu dem Objektiv mit einem stetig veränderlichen Ablenkwinkel abgelenkt. Oder anders ausgedrückt: Ein einfallendes paralleles Strahlenbündel wird gegenüber der optischen Achse des Objektivs 34 oder 36 abgelenkt. Das Objektiv 34 oder 36 dreht sich aber seinerseits. Die Ablenkung des Abbildungs-Strahlenganges durch die veränderliche Keilwirkung der plankonkaven Linse 46 kann nun so auf die Drehung des Objektivs 34 oder 36 abgestimmt werden, daß das Bild des Gesichtsfeld-Sektors 88 für eine bestimmte Zeit relativ zu dem Detektor 90 bzw. 92 stillsteht. Der Zeitbereich, in welchem eine plankonkave Linse 46 des Polygonrades 44 die Eintritts-Apertur des Objektivs 34 oder 36 vollständig freigibt, kann als Belichtungszeit für die Detektoren genutzt werden.

Bei der dargestellten Ausführung rotieren die Objektivmittel 28 um eine horizontale erste Achse 32.

Sie erzeugen dabei im wesentlichen einen Streifen von Einzelbildern längs einer durch die zweite Achse gehenden vertikalen Ebene. Das trifft aber nicht genau zu, denn der Hauptrahmen 16 mir den Objektivmitteln 28 dreht sich auch noch uni die zweite Achse 26. Bei einer Umdrehung der Objektivmittel 28 wird dabei der Hauptrahmen um einen Winkel weitergedreht, welcher dem Winkel entspricht, unter dem die Gesichtsfeld-Sektoren 88 erscheinen. Die Drehrate der optischen Achsen der Objektive 34 und 36 hat daher nicht nur eine radiale Komponente in Richtung der Achse 32 sondern eine zusätzliche azimutale Komponente in Richtung der Achse 26. Die Linsen 46 des Polygonrades 44 müssen dieser Bewegung folgen. Deshalb ist das Polygonrad 44 etwas gegen die Objektivmittel 28 gekippt, derart daß die Geschwindigkeit der Linsen 46 jeweils in die Richtung der Geschwindigkeit der optischen Achsen der Objektive 34 bzw. 36 fällt.

Um das zu beobachtende Gesichtsfeld in möglichst kurzer Zeit mit möglichst langen Belichtungszeiten für die Erfassung der einzelnen Gesichtsfeld-Sektoren 88 durch die Detektoren abzutasten, sind die Gesichtsfeld-Sektoren und der Anzahl der Polygon-Elemente (Linsen 46) des Polygonrades 44 sehr sorgfältig aufeinander abzustimmen. Um die Bilder auf den Detektoren 90 und 92 für eine ausreichende Belichtungszeit hinreichend zu stabilisieren, muß sich das Polygonrad 44 schneller drehen als die Objektivmittel 26. Die erforderlichen Drehgeschwindigkeiten sind über die Brechzahl n der plankonkaven Linsen 46 miteinander gekoppelt. Es gilt

$$\omega_{Polygon} = \omega_{objektivrad} \; n/(n\text{-}1).$$

Dabei ist n eine Materialkonstante, die nicht beliebige Werte annehmen kann. Für eine möglichst effektive Abtastung läßt sich folgende Beziehung aufstellen:

$$\frac{k_{Schritt} \cdot k_{Polygon}}{k_{Gesichtsfeld}} = n\text{-}1.$$

Darin is $k_{Schritt}$ die Anzahl der Gesichtsfeld-Schritte bis zur nächsten Aufnahme-Möglichkeit eines Gesichtsfeld-Sektors 88 durch ein Objektiv 34 oder 36. $k_{Polygon}$ ist die Anzahl der Polygon-Elemente oder Linsen 46. $k_{Gesichtsfeld}$ ist die Anzahl der Gesichtsfeld-Sektoren, die in einem Streifen von 360° erfaßt werden sollen.

Für $k_{Schritt}$ ist ein Wert von 2 anzustreben. Ein Wert von 1 ist nicht erreichbar, weil nach einer Aufnahme eines Gesichtsfeld-Sektors 88 durch ein Objektiv, z.B. 34 zunächst ein Wechsel der mit dem Objektiv 34 zur Stabilisierung des Bildes zusammenwirkenden Linse 46 des Polygonrades 44 stattfinden muß. Ein Wert von mehr als 2 würde die schnelle Erfassung des zu beobachtenden Gesichtsfeldes beeinträchtigen. Bei zwei Objektiven 34 und 36 wird dann, wie in Fig.3 dargestellt ist, in einem 360°-Streifen von jedem Objektiv 34 und 36 jeweils jeder zweite Gesichtsfeld-Sektor 88 erfaßt, wobei diese Folgen von Gesichtsfeld-Sektoren 88 ineinandergeschachtelt sind. In Fig.3 sind $k_{Gesichtsfeld} = 14$

Gesichtsfeld-Sektoren 88.1 bis 88.14 in einem 360°-Streifen abzutasten. Geht man von der Stellung des Objektivrades in Fig.3 aus, so erfaßt Objektiv 34 einen Gesichtsfeld-Sektor 88.1 und Objektiv 36 erfaßt gleichzeitig den diametral gegenüberliegenden Gesichtsfeld-Sektor 88.8. Bei der nächsten möglichen Aufnahme, erfaßt das Objektiv 34 den übernächsten Gesichtsfeld-Sektor 88.3 und das Objektiv 36 den Gesichtsfeld-Sektor 88.10. In Fig.3 sind die von dem Objektiv 34 erfaßten Gesichtfeld-Sektoren in ausgezogen Linien dargestellt, und die von dem Objektiv 36 erfaßten Gesichtsfeld-Sektoren sind in gestrichelten Linien dargestellt.

Die Anzahl $k_{Polygon}$ der Polygon-Elemente oder Linsen 46 ist bei dem dargestellten Ausführungsbeispiel zehn. Bei zwei Objektiven sollte $k_{Polygon}$ eine gerade Zahl sein. Das ermöglicht die dargestellte Auskopplung der Strahlen über die beidseitig reflektierende erste Umlenk-Spiegelfläche 42.

Für $k_{Gesichtsfeld}$ ist bei zwei Objektiven eine Zahl wie 10, 14 oder 18 erforderlich, die nur einmal durch zwei teilbar ist. Für das Ausführungsbeispiel mit $k_{Gesichtsfeld}$ = 14, also vierzehn Gesichtsfeld-Sektoren 88.1 bis 88.14 in einem Streifen von 360°, und einem Polygon mit zehn Polygon-Elementen oder Linsen 46 ergibt sich eine Brechzahl n von 2,425. Berücksichtigt man die Korrektur für die Azimut-Bewegung, so erhöht sich die für die Linsen 46 erforderliche Brechzahl auf 2,437. Ein mögliches Material für die Linsen ist ZnSe mit einer Brechzahl von n = 2,431.

Die Drehzahlen in dem beschriebenen Rundumbeobachtungs-Gerät müssen sehr genau geregelt werden. Außerdem muß zu jedem Zeitpunkt die Position einer rotierenden Baugruppe bekannt sein, um eine korrekte Zuordnung zu gewährleisten. Die Grunddrehzahl des Objektivrades kann jedoch zur Erzielung höherer Wiederholraten oder längerer Integrationszeiten beliebig geändert werden, wenn die Drehzahlen der anderen Baugruppen (Polygonrad 44, Hauptrahmen 16 und Pechan-Prismen 72 und 74) in den erforderlichen Geschwindigkeits-Verhältnissen ebenfalls geändert werden. Für die Antriebe eignen sich daher besonders Synchronmotoren mit permanenterregten Rotoren.

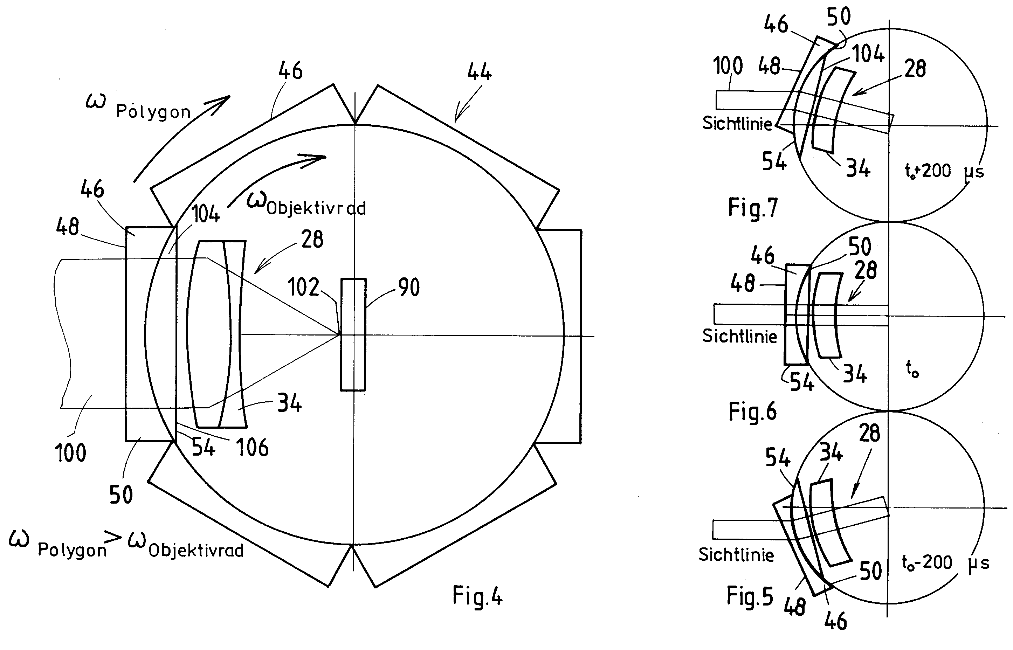

Fig.4 ist eine schematische Darstellung des Polygonrades 44 und der Objektivmittel 28, hier dargestellt durch ein einziges Objektiv 34. Das Objektiv 34 sammelt ein paralleles Lichtbündel 100 aus dem im Unendlichen liegenden Objektfeld auf dem Detektor 90. In Fig.4 laufen Polygonrad 44 und Objektivmittel 28 bzw. Objektiv 34 gleichsinnig im Uhrzeigersinn um. Dabei ist die Drehzahl $\omega_{Prisma}$ des Polygonrades 44 größer als die Drehzahl $\omega_{Optik}$ des Objektivs 34. Fig.4 zeigt die Anordnung zu einem Zeitpunkt $t_0$, zu welchem die optischen Achsen des Objektivs 34 und der plankonkaven Linse 46 des Polygonrades 44 fluchten und das parallele Lichtbündel 100 gerade in einem Punkt 102 der Bündelachse gesammelt wird. Diese Position ist auch in der schematischen Darstellung von Fig.6 angenommen.

Vorher befand sich das Polygonrad 44 in einer Position, wie sie in Fig.5 für den Zeitpunkt $t_0$-200 µs dargestellt ist. Wie man aus Fig.5 erkennen kann, bildet in dieser Stellung die plankonkave Linse 46 des Polygonrades 44 mit der vorderen, plankonvexen Linse 104 des Objektivs 34 einen Keil: Die Planfläche 48 der plankonkaven Linse 46 des Polygonrades 44 bildet mit der Planfläche 106 der plankonvexen Linse 104 einen Winkel, dessen Scheitel unten in Fig.5 liegt. Dadurch wird das parallele Lichtbündel 100, wie dargestellt, nach oben abgelenkt. Das parallele Lichtbündel 100 wird in dem gleichen Punkt des Detektors 90 gesammelt wie bei der Anordnung nach Fig.4 und 6.

Nach der Position von Fig.4 und 6, zu einem Zeitpunkt $t_0$+200 µs, ist die Anordnung in der Position von Fig.7. Auch in dieser Stellung bildet die plankonkave Linse 46 des Polygonrades 44 mit der plankonvexes Linse 104 des Objektivs 34 einen Keil: Die Planfläche 48 der plankonkaven Linse 46 des Polygonrades 44 bildet mit der Planfläche 106 der plankonvexen Linse 104 wieder einen Winkel, dessen Scheitel jetzt aber oben in Fig.7 liegt. Dadurch wird das parallele Lichtbündel 100, wie dargestellt, nach unten abgelenkt. Das parallele Lichtbündel 100 wird auch in dieser Position in dem gleichen Punkt des Detektors 90 gesammelt wie bei der Anordnung nach Fig.4 und 6.

Durch die optische Keilwirkung der zusammenwirkenden Linsen 46 und 104 von Polygonrad 44 und Objektiv 34 wird somit bei kontinuierlichem Umlauf des sowohl des Polygonrades 44 als auch des Objektivs 34 das erfaßte Bild für eine ausreichende Zeit relativ zu dem Detektor 90 festgehalten..

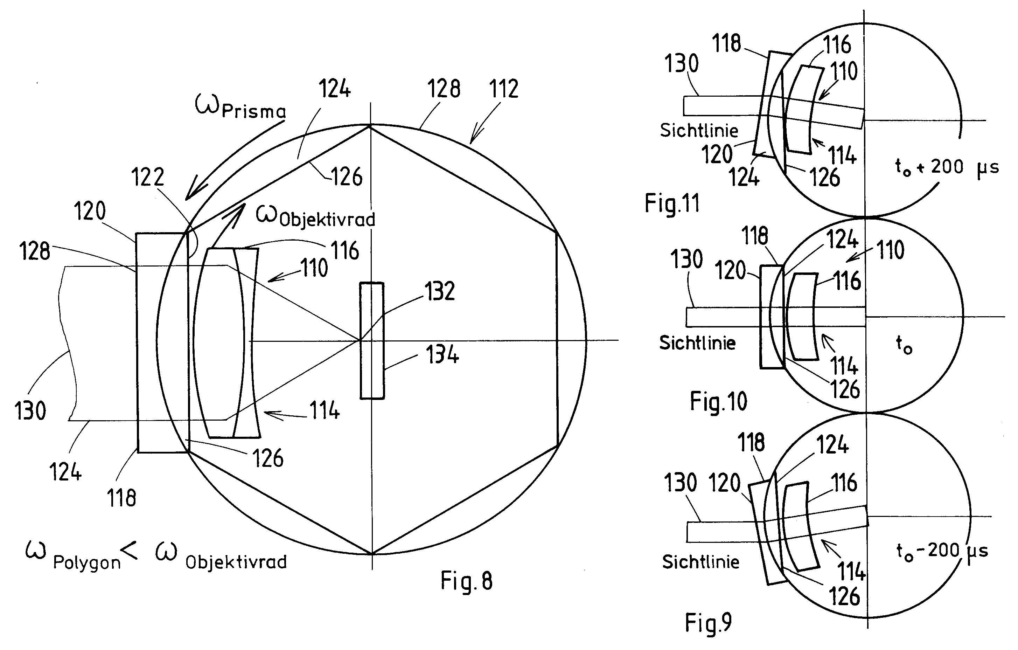

Fig.8 bis 11 zeigen eine abgewandelte Ausführung des Rundumbeobachtungs-Gerätes. Bei dieser Ausführung laufen die Objektivmittel 110 und das Polygonrad 112 gegensinnig um. Die Objektivmittel 110 laufen im Uhrzeigerinn um. Das Poligonrad 112 läuft entgegen dem Uhrzeigersinn um. Dabei ist die Drehzahl $\omega_{Prisma}$ des Polygonrades 112 kleiner als die Drehzahl $\omega_{Optik}$ der Objektivmittel 110. Die Objektivmittel 110 sind in der schematischen Darstellung von Fig.8 von einem Objektiv 114 gebildet. Das Objektiv 114 besteht hier aus einer zweiteiligen Linse 116 und einer im Abstand objektseitig von dieser Linse 116 angeordneten plankonkaven Linse 118. Die plankonkave Linse hat eine objektseitige Planfläche 120 und eine bildseitige konkave Fläche 122. Die konkave Fläche ist wieder um den Schnittpunkt der Drehachsen von Objektivmitteln 110 und Polygonrad 112 gekrümmt. Das Polygonrad 112 weist hier plankonvexe Linsen 124 auf. Die plankonvexen Linsen 124 weisen jeweils eine innere oder bildseitige Planfläche 126 und eine äußere oder objektseitige, konvexe Fläche 128 auf. Auch die konvexen Flächen 128 sind um den Schnittpunkt der Drehachsen von Objektivmitteln 110 und Polygonrad 112 gekrümmt. Ihr Krümmungsradius ist im wesentlichen an den Krümmungsradius der konkaven Fläche 122 angepaßt. Das Polygonrad 112 läuft zwischen der zweiteiligen Linse 116 und der plankorkaven Linse 118 des Objektivs 114 hindurch. Dabei ist zwischen der konkaven Fläche 122 des Objektivs 114 und der konvexen Fläche 128 des Polygonrades 112 ein geringer Luftspalt gebildet.

Auch bei dieser Anordnung bildet die plankonkave Linse 118 des Objektivs 114 mit der plankonvexen Linse 124 des Polygonrades 112 einen optischen Keil mit veränderlichem Winkel. In der Position von Fig.8 und 10 fallen die optischen Achsen der plankonkaven Linse 118 und des Objektivs 114 zusammen. Dann ist der Keilwinkel null, die beiden Linsen 118 und 124 ergänzen sich zu einer planparallelen Platte. Ein einfallendes, paralleles Strahlenbündel 130 wird gerade auf einem Punkt 132 des Detektors gesammelt. Dieser Zeitpunkt wird wieder mit $t_0$ bezeichnet.

Im Zeitpunkt $t_0$-200 μs, der in Fig.9 dargestellt ist, bilden die beiden Linsen 118 und 124 wieder einen optischen Keil: Die Planflächen 120 und 126 bilden einen Winkel miteinander, dessen Scheitel unten in Fig.9 liegt. Dadurch wird das parallele Lichtbündel 130 nach oben in Fig.9 abgelenkt und in dem gleichen Punkt 132 auf dem Detektor 134 gesammelt wie bei der Anordnung von Fig.8 und 10.

Entsprechend bilden im Zeitpunkt $t_0$+200 μs, der in Fig. 11 dargestellt ist, die beiden Linsen 118 und 124 wieder einen optischen Keil: Die Planflächen 120 und 126 bilden einen Winkel miteinander, dessen Scheitel jetzt oben in Fig.11 liegt. Dadurch wird das parallele Lichtbündel 130 nach unten in Fig.11 abgelenkt und wieder in dem gleichen Punkt 132 auf dem Detektor 134 gesammelt wie bei der Anordnung von Fig.8 und 10.

Bei der gegenläufigen Drehrichtung von Polygonrad 112 und Objektivmitteln 110 werden die Drehzahlen von Polygonrad 112 und Objektivmitteln 110 so gewählt, daß

$$\omega_{Polygon} = \omega_{Objektivrad} (n-2)/(n-1).$$

Bei ausreichend langsamer Drehgeschwindigkeit des Polygonrades 112 kann jedem Polygon-Element (jeder plankonvexen Linse 124) ein zusätzliches Prisma zugeordnet werden, wobei diese Prismen die optische Achse abwechselnd nach der einen und nach der anderen Seite aus der Ebene der umlaufenden Objektivmittel 110 heraus ablenkt. Es können dann bei einem Umlauf der Objektivmittel 110 zwei aneinander angrenzende Streifen von Abtastfeldern erfaßt werden. Dadurch erfassen die Objektivmittel 110 ein doppelt breites Gesichtsfeld.

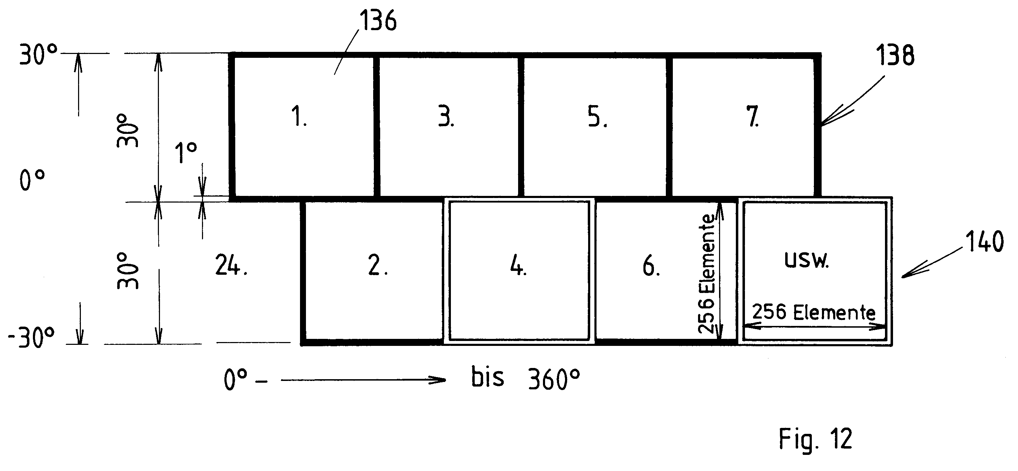

Das ist in Fig.12 dargestellt. Dort sind die verschiedenen, nacheinander erfaßten Abtastfelder 136 in den beiden Streifen 138 und 140 dargestellt. Jedes Abtastfeld 136 umfaßt z.B. 256 Bildelemente oder Pixel.

## Patentansprüche

1. Rundumbeobachtungs-Gerät zur Erfassung eines Gesichtsfeldes mit einem großen Raumwinkel durch wenigstens einen Detektor (90,92) mit einer zweidimensionalen Anordnung von Detektorelementen **gekennzeichnet durch**

(a) ein abbildendes optisches System mit kontinuierlich um eine erste (32) Achse mit einer ersten Drehzahl umlaufenden Objektivmitteln (28) mit einem umlaufenden Abbildungs-Strahlengang und

(b) ein mit einer zweiten Drehzahl umlaufendes Polygonrad (44) in dem umlaufenden Abbildungs-Strahlengang mit strahlablenkenden Mitteln (46) zur stetigen Ablenkung des Abbildungs-Strahlenganges jedesmal, wenn der umlaufende Abbildungs-Strahlengang eine Polygonfläche des Polygonrades (44) passiert, derart, daß während einer endlichen Beobachtungszeit ein Gesichtsfeld-Sektor (88) stationär auf dem Detektor (90,92) abgebildet wird.

2. Rundumbeobachtungs-Gerät nach Anspruch 1, **gekennzeichnet durch** Mittel (20) zum kontinuierlichen Drehen des Polygonrades (44) und der Objektivmittel (28) um eine zweite Achse (26), die mit der ersten Achse (32) einen Winkel einschließt, mit einer dritten Drehzahl.

3. Rundumbeobachtungs-Gerät nach Anspruch 2, **dadurch gekennzeichnet, daß** die erste und die zweite Achse (32 bzw. 26) zueinander senkrecht stehen.

4. Rundumbeobachtungs-Gerät nach einem der Ansprüche 1 bis 3, **dadurch gekennzeichnet, daß** Objektivmittel (28) und Polygonrad (44) mit gleichem Drehsinn umlaufen, wobei die Drehzahl ($\omega_{Prisma}$) des Polygonrades (44) größer ist als die Drehzahl ($\omega_{Optik}$) der Objektivmittel (28).

5. Rundumbeobachtungs-Gerät nach Anspruch 4, **dadurch gekennzeichnet, daß** die strahlablenkenden Mittel des Polygonrades (44) von plankonkaven Linsen (46) gebildet sind.

6. Rundumbeobachtungs-Gerät nach Anspruch 4, **dadurch gekennzeichnet daß** die Drehzahlen des Polygonrades (44) und der Objektivmittel (28) sich verhalten wie n/(n-1), wenn n die Brechzahl der plankonkaven Linsen (46) des Polygonrades (44) ist.

7. Rundumbeobachtungs-Gerät nach Anspruch 6, **dadurch gekennzeichnet, daß** die konkaven Innenflächen (50) der plankonkaven Linsen (46) um einen auf der Umlaulachse (32) der Objektivmittel (28) liegenden Punkt gekrümmt sind.

8. Rundumbeobachtungs-Gerät nach Anspruch 7, **dadurch gekennzeichnet, daß** die Objektivmittel (28) eine innerhalb des Polygonrades (44) umlaufende Linse mit einer ebenfalls um den auf der Umlaufachse liegenden Punkt gekrümmten Frontfläche (54) aufweisen, die mit den Innenflächen (50) der plankonkaven Linsen (46) des Polygonrades (44) schmale Luftspalte bildet.

9. Rundumbeobachtungs-Gerät nach einem der Ansprüche 1 bis 3, **dadurch gekennzeichnet, daß** Objektivmittel (110) und Polygonrad (112) mit entgegengesetztem Drehsinn umlaufen, wobei die Drehzahl ($\omega_{Polygon}$) des Polygonrades (44) kleiner ist als die Drehzahl ($\omega_{Objektivrad}$) der Objektivmittel (28).

10. Rundumbeobachtungs-Gerät nach Anspruch 9, **dadurch gekennzeichnet, daß**

(a) das Polygonrad (112) von plankonvexen Linsen (124) mit konvexen Außenflächen (128) gebildet ist,

(b) die Objektivmittel (110) radial außerhalb des Polygonrades (112) eine plankonkave Linse (118) mit einer konkaven Innenfläche (122) aufweisen,

(c) wobei die Außenflächen (128) der plankonvexen Linsen (124) des Polygonrades (112) und die Innenfläche (122) der Objektivmittel (110) jeweils um auf der ersten Achse liegenden, gemeinsamen Punkt gekrümmt sind

11. Rundumbeobachtungs-Gerät nach Anspruch 10, **dadurch gekennzeichnet, daß** sich die Drehzahlen von Polygonrad und Objektivmitteln verhalten wie (n-2)/(n-1), wenn n die Brechzahl plankonvexen Linsen des Polygonrades ist.

12. Rundumbeobachtungs-Gerät nach einem der Ansprüche 1 bis 11, **dadurch gekennzeichnet, daß** das abbildende optische System eine erste, um die zweite Achse (26) rotierende Umlenk-Spiegelfläche (42) aufweist, durch welche der Strahlengang in eine längs der ersten Achse (32) verlaufende Richtung umlenkbar ist.

13. Rundumbeobachtungs-Gerät nach Anspruch 12, **dadurch gekennzeichnet, daß** das abbildende optische System weiterhin

(a) eine auf der ersten Achse (32) angeordnete zweite Umlenk-Spiegelfläche (60,62) aufweist, durch welche der von der ersten Umlenk-Spiegelfläche (42) radial umgelenkte Strahlengang (56,58) in eine zu der zweiten Achse (26) parallele Richtung umlenkbar ist, und

(b) bilddrehende Mittel (72,74), durch welche das Bild des Gesichtsfeld-Sektors (88) ständig zu einem stationär angeordneten Detektor (90,92) ausgerichtet gehalten wird.

14. Rundumbeobachtungs-Gerät nach Anspruch 13, **dadurch gekennzeichnet, daß** das abbildende optische System eine Feldlinse (64,66) zwischen der ersten und der zweiten Umlenk-Spiegelfläche (42 bzw. 60,62) aufweist.

15. Rundumbeobachtungs-Gerät nach Anspruch 13 oder 14, **dadurch gekennzeichnet, daß** das abbildende optische System ein weiteres abbildendes Linsensystem (68,70) im Abbildungs-Strahlengang zwischen der zweiten Umlenk-Spiegelfläche (60,62) und den bilddrehenden Mitteln (72,74) enthält.

16. Rundumbeobachtungs-Gerät nach Anspruch 15, **dadurch gekennzeichnet, daß** das abbildende optische System ein weiteres abbildendes Linsensystem (84,86) im Abbildungs-Strahlengang zwischen deden bilddrehenden Mitteln (72,74) und den Detektor (90,92) enthält.

17. Rundumbeobachtungs-Gerät nach einem der Ansprüche 9 bis 12, **dadurch gekennzeichnet, daß** die bilddrehenden Mittel (72,74) von einem Pechan-Prisma gebildet sind, das drehbar gelagert und mit der halben Drehzahl der um die erste Achse (32) umlaufenden Objektivmittel (28) angetrieben ist.

18. Rundumbeobachtungs-Gerät nach einem der Ansprüche 1 bis 17, **dadurch gekennzeichnet, daß**

(a) die umlaufenden Objektivmittel (28) ein Paar von in bezug auf die Umlaufachse (32) diametral gegenüberliegenden Objektiven (34,36) aufweisen,

(b) zwei Detektoren (90,92) vorgesehen sind und

(c) die beiden von den beiden Objektiven (34,36) erfaßten Gesichtsfeld-Sektoren (88.1,88.8) durch abbildende optische Systeme auf je einen der beiden Detektoren (90,92) abgebildet werden.

19. Rundumbeobachtungs-Gerät nach Anspruch 18, **dadurch gekennzeichnet, daß**

(a) die erste Umlenk-Spiegelfläche (42) auf beiden Seiten reflektierend ausgebildet ist, so daß die beiden von den Objektiven (34,36) ausgehenden Abbildungs-Strahlengänge an den beiden Seiten der ersten Spiegelfläche (42) in entgegengesetzte Richtungen umgelenkt werden, und

(b) für jeden der Abbildungs-Strahlengänge (56,58) übereinstimmende Mittel zur Erzeugung eines Bildes des zugehörigen Gesichtsfeld-Sektors auf einem der Detektoren (90,92) vorgesehen sind.

20. Rundumbeobachtungs-Gerät nach Anspruch 19, **dadurch gekennzeichnet, daß** die beidseitig reflektierende erste Spiegelfläche (42) von totalreflektierenden Flächen eines zweiteiligen Prismas (40) gebildet ist.

21. Rundumbeobachtungs-Gerät nach einem der Ansprüche 1 bis 20, **dadurch gekennzeichnet, daß** die Mittelebene des Polygonrades (44) mit der Mittelebene der Objektivmittel (28) einen Winkel bildet.

22. Rundumbeobachtungs-Gerät nach einem der Ansprüche 1 bis 21, **dadurch gekennzeichnet, daß** der Detektor (90,92) ein IR-Matrix-Detektor ist.

23. Rundumbeobachtungs-Gerät nach Anspruch 9, **dadurch gekennzeichnet, daß** jedem Polygon-Element (124) ein zusätzliches Prisma zugeordnet ist, wobei diese Prismen die optische Achse abwechselnd nach der einen und nach der anderen Seite aus der Ebene der umlaufenden Objektivmittel (110) heraus ablenken.

Fig. 1

Fig.2

Fig.3

Fig.7

Fig.6

Fig.5

Fig.4

$\omega_{Prisma}$

$\omega_{Objektivrad}$

$\omega_{Polygon} < \omega_{Objektivrad}$

124

128 112

122

120

128

130

124

118

126

110

116

132

134

114

Fig.8

118

130

Sichtlinie

120

124

126

116

110

114

$t_o + 200\ \mu s$

Fig.11

130

120

118

124

110

116

Sichtlinie

114

126

$t_o$

Fig.10

118

130 120

124

116

Sichtlinie

114

126

$t_o - 200\ \mu s$

Fig.9

EP 0 840 157 A2

Fig. 12